# EUROPÄISCHE PATENTSCHRIFT

(11) **EP 1 456 931 B1**
(45) Veröffentlichungstag und Bekanntmachung des Hinweises auf die Patenterteilung: **23.11.2005**
(21) Anmeldenummer: 03744774.5
(22) Anmeldetag: 10.01.2003
(51) Int. Cl.: H02K 1/27, H02K 21/16

(54) **INNENLÄUFERMOTOR**
INNER ROTOR MOTOR
MOTEUR A ROTOR INTERNE

(30) Priorität: 22.03.2002 DE 20204660 U
(43) Veröffentlichungstag der Anmeldung: 15.09.2004
(73) Patentinhaber: ebm-papst St. Georgen GmbH & Co. KG, 78112 St. Georgen (DE)
(72) Erfinder: ILES-KLUMPNER, Dorin, 78112 St. Georgen (DE)
(74) Vertreter: Raible, Tobias
(86) Internationale Anmeldenummer: PCT/EP2003/000167
(87) Internationale Veröffentlichungsnummer: WO 2003/081748

(56) Entgegenhaltungen:
- US-A- 4 570 333
- PATENT ABSTRACTS OF JAPAN vol. 2000, no. 11, 3. Januar 2001 (2001-01-03) -& JP 2000 217287 A (TOSHIBA CORP), 4. August 2000 (2000-08-04)
- PATENT ABSTRACTS OF JAPAN vol. 1999, no. 1, 29. Januar 1999 (1999-01-29) -& JP 10 271723 A (HITACHI METALS LTD), 9. Oktober 1998 (1998-10-09)
- PATENT ABSTRACTS OF JAPAN vol. 2000, no. 20, 10. Juli 2001 (2001-07-10) -& JP 2001 069701 A (MITSUBISHI HEAVY IND LTD), 16. März 2001 (2001-03-16)
- PATENT ABSTRACTS OF JAPAN vol. 1995, no. 11, 26. Dezember 1995 (1995-12-26) -& JP 07 222384 A (TOSHIBA CORP), 18. August 1995 (1995-08-18)
- PATENT ABSTRACTS OF JAPAN vol. 1997, no. 1, 31. Juli 1997 (1997-07-31) -& JP 08 251846 A (MATSUSHITA ELECTRIC IND CO LTD), 27. September 1996 (1996-09-27)

## Beschreibung

Die Erfindung betrifft einen bevorzugt mehrphasigen Innenläufermotor mit einem genuteten Stator und einem permanentmagnetischen Rotor.

Bei solchen Motoren ergibt sich das Phänomen, dass die Grenzen zwischen den einzelnen Rotorpolen, die sogenannten Polgrenzen, die Stellen größten Luftspalts suchen. Für den Betrachter hat es deshalb den Anschein, als würden die Polgrenzen von den Nuten des Stators angezogen. Diesen Effekt bezeichnet man auf Englisch als "cogging", auf Deutsch als "Nutrucken". Das dabei entstehende Drehmoment bezeichnet man als Haltemoment oder Rastmoment (cogging torque), weil es bestrebt ist, den Rotor in bestimmten Drehstellungen festzuhalten bzw. einzurasten.

Dieser Effekt wird erzeugt durch ein sogenanntes Reluktanzmoment, d.h. bei der Drehung des Rotors relativ zum Stator wird im magnetischen Kreis des Motors in bestimmten Drehwinkelbereichen magnetische Energie gespeichert, und in anderen Drehwinkelbereichen wird diese magnetische Energie freigegeben, ähnlich, wie wenn man eine Feder abwechselnd spannen und entspannen würde. Zum Speichern muss dem Rotor Energie zugeführt werden, d.h. der Rotor wird hierdurch gebremst, und umgekehrt wird dort, wo gespeicherte Energie freigegeben wird, der Rotor angetrieben. Dreht man den Rotor eines solchen Motors von Hand, so hat man den Eindruck, dass man "jede Nut spürt."

Dieses Reluktanzmoment ist bei vielen Antriebsaufgaben störend, so dass man dort gezwungen ist, eisenlose Statorwicklungen zu verwenden, bei denen kein Reluktanzmoment auftritt, doch ist die Leistung solcher Motoren mit eisenlosem Stator meist nicht ausreichend, weil ihr Luftspalt sehr groß ist.

Patent Abstracts of Japan Bd. 2000, Nr. 11 und JP 2000 217287 A offenbaren einen Motor für einen Kompressor mit einem Innenläufer und einem Stator. Im Innenläufer ist ein Permanentmagnet vorgesehen, an dessen Endabschnitten jeweils eine Ausnehmung vorgesehen ist, welche sich in die Nähe einer äußeren Oberfläche erstreckt. Die Dicke eines Stegs zwischen der äußeren Oberfläche des Innenläufers und einer inneren Oberfläche der Ausnehmung nimmt von der Seite des Endabschnitts des Permanentmagneten zur Seite des nächstliegenden Permanentmangeten hin ab.

Es ist deshalb eine Aufgabe der Erfindung, einen neuen Innenläufermotor bereitzustellen.

Nach der Erfindung wird diese Aufgabe gelöst durch den Gegenstand des Anspruchs 1. Man erhält so einen Innenläufermotor mit verbesserten Eigenschaften, bei dem das Nutrucken sehr klein gehalten werden kann.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: einen Längsschnitt durch einen elektronisch kommutierten Innenläufermotor nach einer bevorzugten Ausführungsform der Erfindung,
- Fig. 2: einen vergrößerten Längsschnitt durch das Rotorblechpaket des Motors der Fig. 1, gesehen längs der Linie VI-VI der Fig. 5,
- Fig. 3: eine nochmals vergrößerte Darstellung einer Einzelheit, die in Fig. 2 mit III bezeichnet ist,
- Fig. 4: eine vergrößerte Draufsicht auf ein Blech des Rotorblechpakets,
- Fig. 5: eine vergrößerte Draufsicht auf eine Endscheibe des Rotorblechpakets,
- Fig. 6: einen Schnitt, gesehen längs der Linie VI-VI der Fig. 5,
- Fig. 7: eine stärker vergrößerte Darstellung der Einzelheit VII der Fig. 6,
- Fig. 8: eine stärker vergrößerte Darstellung der Einzelheit VIII der Fig. 6,
- Fig. 9: eine teilweise schematisierte Darstellung von Stator und Rotor der Fig. 1, gesehen in einer üblichen Schnittdarstellung,
- Fig. 10: eine vergrößerte Darstellung des Rotors, in einer Schnittdarstellung,
- Fig. 11: eine noch stärker vergrößerte Ausschnittsdarstellung aus Fig. 10,
- Fig. 12: eine Darstellung zur theoretischen Erläuterung der Wirkungsweise der Erfindung,
- Fig. 13: eine Schemadarstellung zur Erläuterung des Nutruckens bzw. Haltemoments, und
- Fig. 14: eine Schemadarstellung zur Erläuterung, wie sich das Nutrucken verschiedener Rotorpole überlagert.

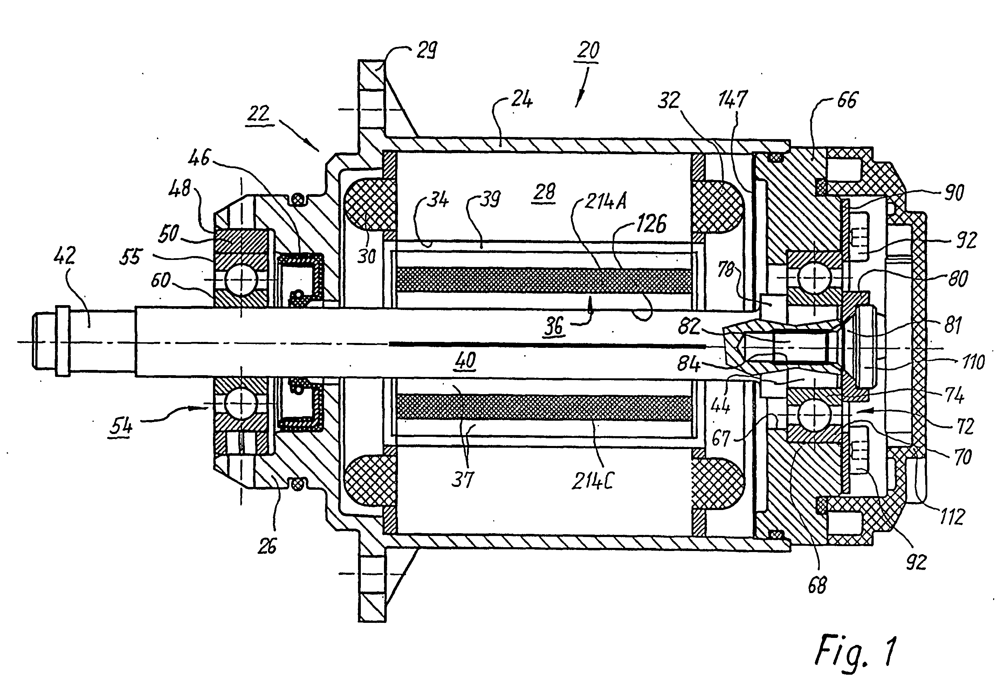

**Fig. 1** zeigt einen elektronisch kommutierten Innenläufermotor 20 mit einem Gehäuse 22, das ein zylindrisches Gehäuseteil 24, ein A-Lagerschild 26 und einen Befestigungsflansch 29 aufweist.

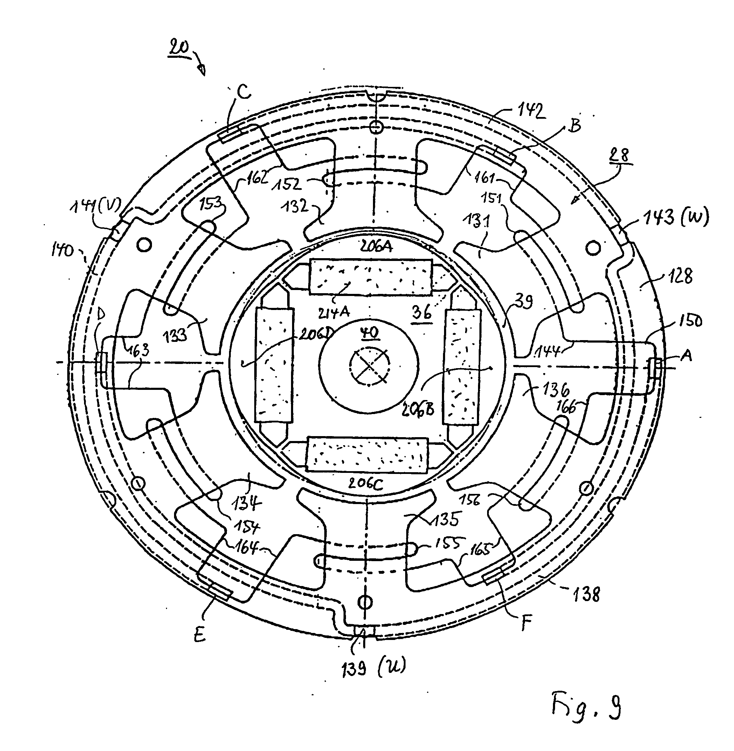

In dem zylindrischen Gehäuseteil 24 ist das Blechpaket 128 (Fig. 9) eines Außenstators 28 angeordnet, dessen Wickelköpfe bei 30 und 32 angedeutet sind. Der Stator 28 hat eine Innenausnehmung 34, in der ein vierpoliger Innenrotor 36 mit einem Blechpaket 37 aus Elektroblech (DIN 46400, Blatt 1), bevorzugt Blech V400, und mit Permanentmagneten 214A bis 214D (vgl. Fig. 9 bis 11) auf einer Welle 40 angeordnet ist, deren Antriebsende mit 42 und deren inneres Wellenende mit 44 bezeichnet sind. Ein Luftspalt 39 trennt den Stator 28 vom Rotor 36. Ein solcher Motor 20 kann auch als permanent erregte Synchron-Innenläufermaschine bezeichnet werden.

Im A-Lagerschild 26 ist in üblicher Weise eine Dichtung 46 für die Welle 40 vorgesehen. Ferner befindet sich dort eine Ausnehmung 48, in der ein Führungsglied 50 für den Außenring 55 eines Wälzlagers 54 befestigt ist. Der Innenring 60 des Wälzlagers 54 ist auf die Welle 40 aufgepresst.

Im offenen Ende des zylindrischen Gehäuseteils 24 ist ein B-Lagerschild 66 befestigt. Dieses hat eine mit einer Ringschulter 67 versehene Ausnehmung 68 für den Außenring 70 eines Wälzlagers 72, dessen Innenring 74 auf dem Wellenende 44 befestigt ist. Hierzu hat die Welle 40 einen Ringbund 78, mit dem sie gegen die linke Seite des Innenrings 74 anliegt. Gegen seine rechte Seite liegt ein Formstück 80 an, das durch den Senkkopf 81 einer Senkkopfschraube 82 in Richtung zur Welle 40 gepresst wird und das etwa ringförmig ausgebildet ist. Die Schraube 82 ist in ein Innengewinde 84 im Wellenende 44 eingeschraubt und presst dadurch das Formstück 80 in Richtung zum Innenring 74.

Zum sicheren Einspannen des Außenrings 70 dient ein flaches, ringförmiges Teil 90, das durch drei gleichmäßig verteilte Schrauben 92 an seiner äußeren Peripherie am Lagerschild 66 befestigt ist, und das mit seinem radial inneren Teil gegen den Außenring 70 anliegt und diesen nach links gegen die Schulter 67 presst. (Die Ausnehmung 68 ist etwas kürzer als der Außenring 70).

Die Schraube 82 ist eine Senkkopfschraube mit einem Innensechskant. Das Formstück 80 besteht aus einem nicht ferromagnetischen Werkstoff, bevorzugt Messing.

Nachdem das Formstück 80 mittels der Schraube 82 am Wellenende 44 befestigt worden ist, wird in einer zylindrischen Ausnehmung des Formstücks 80 ein Steuermagnet 110 befestigt, z.B. durch Kleben. Der Steuermagnet 110 ist auf seiner in Fig. 1 rechten Seite mit einem Magnetisierungsmuster versehen und dient zur Steuerung von (nicht dargestellten) magnetoresistiven Widerständen, die an einem Gehäusedeckel 112 auf der B-Seite des Motors 20 angeordnet sind und zur Erfassung der Drehstellung des Rotors 36 dienen, um Form und Kommutierung der Ströme im Stator 28 exakt zu steuern. Die Kommutierung mittels solcher durch einen Steuermagneten 110 gesteuerten Rotorstellungssensoren ist dem Fachmann in vielerlei Varianten bekannt und bedarf daher keiner weiteren Erläuterung. Das Magnetisierungsmuster auf der rechten Seite des Steuermagneten 110 wird bevorzugt erst erzeugt, nachdem dieser im Formstück 80 befestigt worden ist, und dies geschieht bevorzugt dann, wenn die Dauermagnete des Rotors 36 magnetisiert werden.

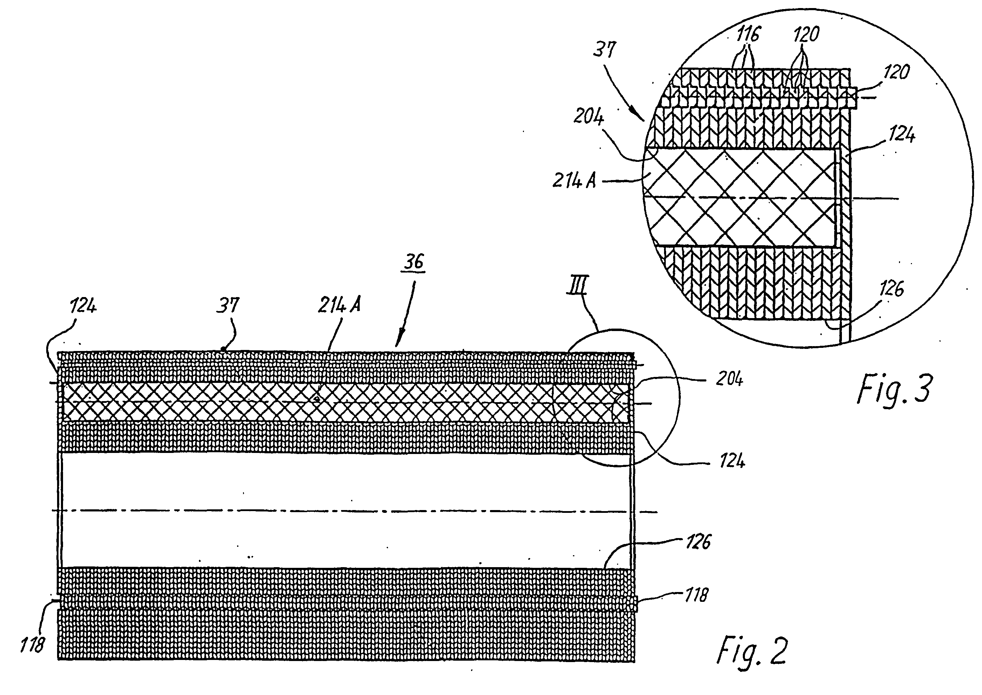

**Fig. 2** zeigt einen Schnitt durch das Blechpaket 37 des Rotors 36, gesehen längs der Linie VI-VI der Fig. 5. Das Blechpaket 37 ist aus Blechen 116 aufgebaut, wie das in **Fig. 3** in starker Vergrößerung dargestellt ist.

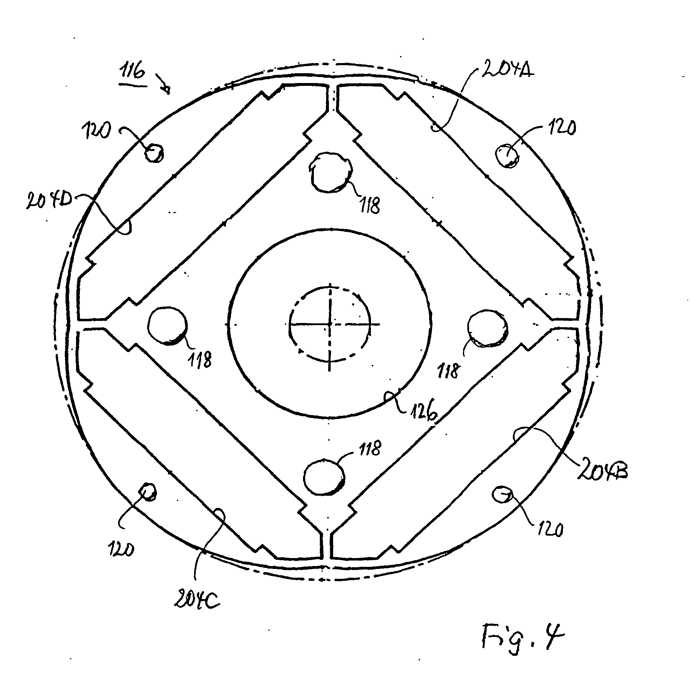

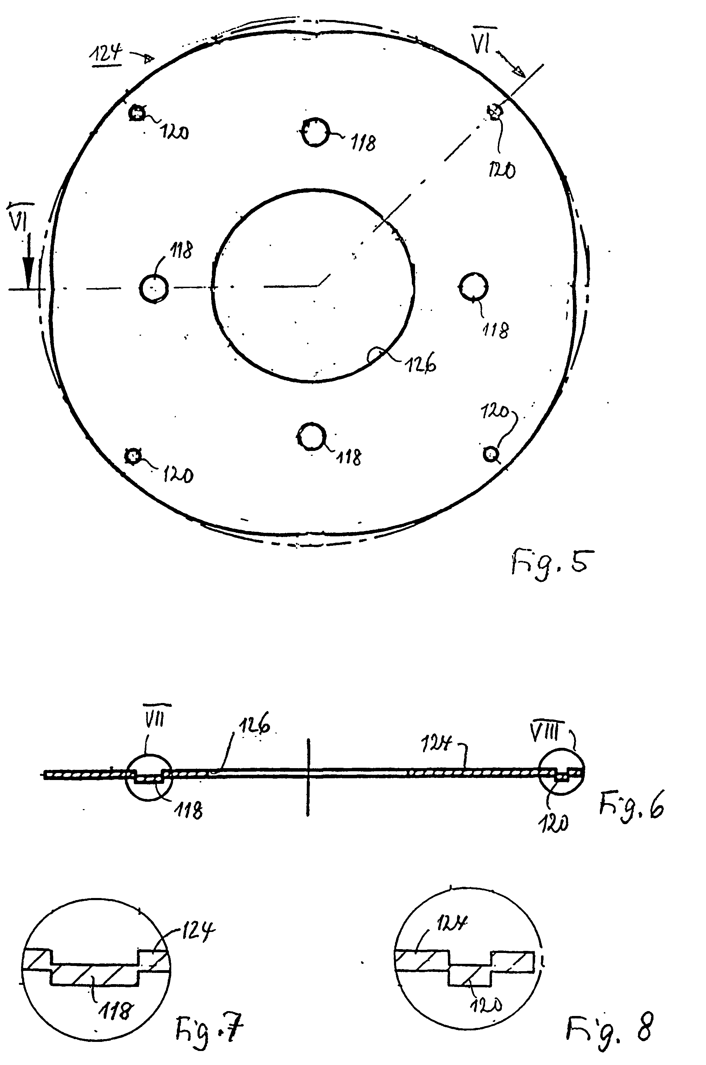

**Fig. 4** zeigt eine Draufsicht auf ein solches Blech 116, z.B. aus Dynamoblech V400, wie es nachfolgend bei Fig. 9 bis 11 näher beschrieben wird. Es ist mit insgesamt acht Noppen für eine sogenannte Stanzpacketierung versehen, nämlich mit vier inneren Noppen 118, welche in Vergrößerung der Darstellung nach Fig. 7 entsprechen, und mit vier äußeren Noppen 120, welche in Vergrößerung der Darstellung nach Fig. 8 entsprechen. Fig. 3 zeigt, wie die äußeren Noppen 120 ineinander gepresst sind und dadurch das Blechpaket 37 zusammenhalten. Diese Darstellung gilt analog genauso für die Noppen 118, so dass zwei benachbarte Bleche 116 an insgesamt acht Stellen durch diese Noppenverbindungen verbunden sind.

Im Blechpaket 37 befinden sich vier Neodym-Bor-Dauermagnete 214A bis 214D in Taschen 204A bis 204D, vgl. die Fig. 9 bis 11. Bevorzugt haben diese Dauermagnete eine Halte-Remanenz von 1,2 T. Die Taschen 204A bis 204D sind an beiden Enden verschlossen durch identische Abschlussbleche 124, von denen eines in den Fig. 5 bis 8 dargestellt ist. Ein solches Abschlussblech 124 unterscheidet sich von den Rotorblechen 116 durch zweierlei Dinge:
a) Es hat keine Taschen 204.
b) Es ist aus einem nicht magnetischen Werkstoff hergestellt, gewöhnlich - aus Festigkeitsgründen - aus einem rostfreien Stahl, z.B. X12 CrNi17.7. Dieses Blech 124 hat bevorzugt die gleiche Umrissform wie die Rotorbleche 116 und hat ebenfalls vier innere Noppen 118 und vier äußere Noppen 120.

Die Abschlussbleche 124 verhindern zuverlässig, dass Teile eines Rotormagneten 214 aus einer der Taschen 204 in das Innere des Motors 20 gelangen, z.B. in dessen Luftspalt 39.

**Fig. 6** zeigt einen Schnitt durch ein Abschlussblech 124, aus dem die Form der Noppen 118, 120 grob erkennbar ist, und Fig. 7 und 8 zeigen die Noppen 118, 120 in etwa fünffacher Vergrößerung. Diese Noppen passen also mit denen der Rotorbleche 116 exakt zusammen und werden bei der Packetierung mit diesen zusammengesteckt und mit einer vorgegebenen Kraft in einer Presse zusammengepresst, um spezifizierte Werte (Zugkraft; Scherfestigkeit) zu erhalten.

Das Blechpaket 37 hat eine Innenausnehmung 126, in welche die Welle 40 eingepresst wird, welche dadurch zu einem Bestandteil der magnetischen Kreises des Rotors 36 wird.

**Fig. 9** zeigt eine übliche schematisierte Darstellung von Außenstator 28 und Rotor 36. Die Statoranordnung 28 hat ein übliches Blechpaket 128, bei dem in einem Winkelbereich von 360° mech. sechs Nuten mit Nutzähnen 131, 132, 133, 134, 135 und 136 vorgesehen sind, zwischen denen entsprechende Nutöffnungen liegen. An einer Stirnseite der Statoranordnung 28 befinden sich, in einem (nicht dargestellten) Isolator eine U-Kupferschiene 138 mit einer Anschlussfahne 139, eine V-Kupferschiene 140 mit einer Anschlussfahne 141, und eine W-Kupferschiene 142 mit einer Anschlussfahne 143, welche Schienen sich jeweils über einen Winkel von etwa 180° el. erstrecken und an der Stirnseite der Statoranordnung 28 angeordnet sind. Da sich die Kupferschienen 138, 140, 142 jeweils nur über 180° mech. erstrecken, befinden sich an jeder Stelle des Umfangs nur zwei Kupferschienen, z.B. an der 12-Uhr-Stellung der Fig. 9 die Schienen 142 (außen) und 140 (innen). Jede Schiene verläuft über etwa 90° mech. radial außen, und über etwa 90° mech. radial weiter innen, vgl. Fig. 9.

Bezogen auf das Zifferblatt einer Uhr erstreckt sich die U-Schiene 138 etwa von 3 bis 9 Uhr. Die V-Schiene 140 erstreckt sich von etwa 7 bis 1 Uhr. Die W-Schiene 142 erstreckt sich von etwa 11 bis 5 Uhr. Diese Schienen sind voneinander isoliert. Ihre Anschlussfahnen 139, 141, 143 dienen zur elektrischen Verbindung mit einer Leiterplatte 147 (Fig. 1), auf der Leistungstransistoren zur Steuerung der Ströme in der Statorwicklung angeordnet sind. Dies sind bevorzugt eingeprägte sinusförmige Ströme, die von einer entsprechenden Vorrichtung geliefert werden, wie das bei solchen Synchronmotoren bekannt ist. Durch die Kupferschienen erhält man extrem kurze und induktionsarme Zuleitungen und dadurch niedrige Verluste in diesen Zuleitungen, auch bei hohen Drehzahlen.

Auf den Zähnen des Blechpakets 128 befinden sich identische Wicklungsspulen, deren - übereinstimmender - Wicklungssinn in Fig. 9 beispielhaft dargestellt ist. Auf dem ersten Zahn 131 befindet sich eine erste Wicklungsspule 151. Man beginnt mit dem Wickeln dieser Spule, nachdem der Anfang 150 des Wicklungsdrahtes 144 an einer Stelle A (3 Uhr) an der U-Schiene 138 befestigt wurde.

Die Schiene 142 ist an der Stelle des Anschlusses A voll vom erwähnten Isolator umschlossen, so dass ein Kurzschluss zwischen den Schienen 138 und 142 dort unmöglich ist. Dies gilt analog für die anderen Schienen, d.h. diese sind zwischen den Anschlussstellen voll vom erwähnten Isolator umschlossen, und an den Anschlussstellen ragt immer nur der Anschluss einer Schiene aus diesem Isolator heraus. Hierdurch ergibt sich eine hohe Betriebssicherheit.

Anschließend an die Spule 151 wickelt man die zweite Wicklungsspule 152 auf dem zweiten Zahn 132, dann die dritte Wicklungsspule 153 auf dem dritten Zahn 133, dann die vierte Wicklungsspule 154 auf dem vierten Zahn 134, die fünfte Wicklungsspule 155 auf dem fünften Zahn 135, und schließlich die sechste Wicklungsspule 156 auf dem sechsten Zahn 136. Es handelt sich also um eine nicht überlappende Wicklung, die maschinell leicht herzustellen ist, auch deshalb, weil eine Nutschrägung der Statornuten gewöhnlich entfallen kann.

Zwischen den Spulen 151 und 152 entsteht eine erste Drahtschleife 161, die an einer Stelle B (1 Uhr) mit der V-Schiene 140 elektrisch und mechanisch verbunden wird, bevorzugt, ohne den Wicklungsdraht 144 zu unterbrechen.

Zwischen den Spulen 152 und 153 entsteht eine zweite Drahtschleife 162, die an einer Stelle C (11 Uhr) mit der W-Schiene 142 verbunden wird.

Zwischen den Spulen 153 und 154 entsteht eine dritte Drahtschleife 163, die an einer Stelle D (9 Uhr) mit der U-Schiene 138 verbunden wird, welche also die Stellen A und D elektrisch miteinander verbindet.

Zwischen den Spulen 154 und 155 entsteht eine vierte Drahtschleife 164, die an einer Stelle E (7 Uhr) mit der V-Schiene 140 verbunden wird, welche die Stellen B und E elektrisch miteinander verbindet.

Zwischen den Spulen 155, 156 befindet sich eine fünfte Drahtschleife 165, die an einer Stelle F (5 Uhr) mit der W-Schiene 142 verbunden wird, welche die Stellen C und F elektrisch miteinander verbindet.

Das freie Ende der Spule 156 ist mit 166 bezeichnet und an der Stelle A mit der U-Schiene 138 und dem Wicklungsanfang 150 verbunden. Damit ist die Wicklung abgeschlossen.

Aus der vorstehenden Beschreibung geht hervor, dass es sich um eine Dreieckswicklung ohne überlappende Spulen handelt, bei der in jedem Strang zwei Wicklungsspulen parallelgeschaltet sind, nämlich im Strang zwischen den Anschlüssen U und V die Spulen 151 und 154, im Strang zwischen den Anschlüssen V und W die Spulen 152 und 155, und im Strang zwischen den Anschlüssen W und U die Spulen 153 und 156. Diese Stränge werden durch eine (nicht dargestellte) elektronische Steuereinrichtung in der bei einem Dreiphasensystem üblichen Weise mit eingeprägten sinusförmigen Strömen beaufschlagt, um ein weitgehend konstantes elektromagnetisches Drehmoment zu erzeugen. Ggf. können auch andere Mehrphasensysteme verwendet werden, doch wird ein Dreiphasensystem wegen seiner Einfachheit bevorzugt.

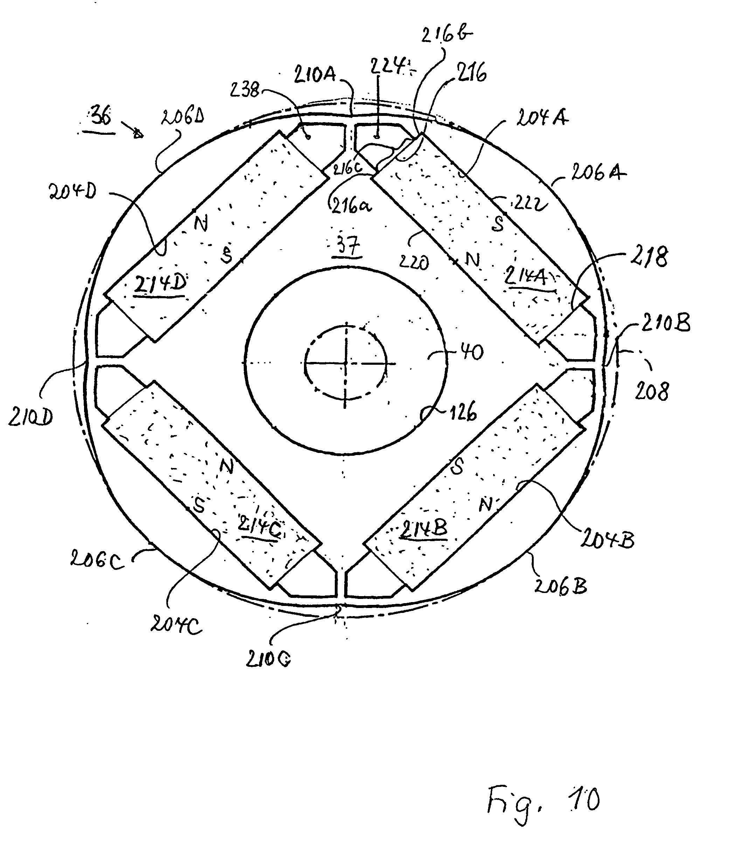

**Fig. 10** zeigt im Schnitt einen bevorzugten Aufbau des vierpoligen Rotors 36, in stark vergrößertem Maßstab (ca. 5-fach vergrößert). Sein Blechpaket 37 enthält vier identische Taschen 204A, 204B, 204C, 204D, welche jeweils voneinander einen Winkelabstand von 90° mech. = 180° el. haben.

Die vier Rotorpole sind mit 206A bis 206D bezeichnet und als ausgeprägte Pole ausgebildet. Um dies zu verdeutlichen, ist ein den Rotor 36 umhüllender Zylinder 208 mit strichpunktierten Linien angedeutet. Man erkennt, dass das Blechpaket 37 jeweils im Bereich seiner Pollücken 210A bis 210D einen leicht verringerten Durchmesser hat, der z.B. 97 % des Durchmessers in der Polmitte betragen kann, wobei der Durchmesser von einer Pollücke zur Polmitte hin kontinuierlich zunimmt. Die Zunahme kann z.B. einem Kreisbogenabschnitt entsprechen. Durch diese Ausgestaltung wird die Flussverteilung am Rotorumfang im wesentlichen sinusförmig, so dass man im Betrieb eine sinusförmige Gegen-EMK erhält.

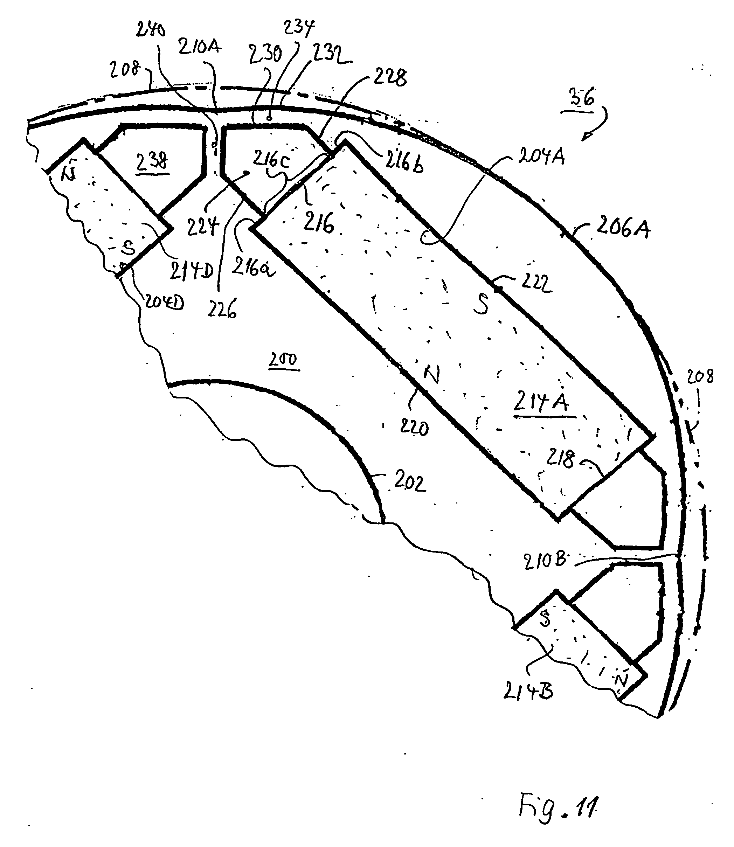

Die Tasche 204A, welche als Beispiel in **Fig. 11** vergrößert dargestellt ist, erstreckt sich zwischen den Pollücken 210A und 210B, die Tasche 204B zwischen den Pollücken 210B und 210C, etc., wie dargestellt. In jeder Tasche befindet sich ein im wesentlichen rechteckförmiger, radial magnetisierter Permanentmagnet 214A bis 214D, bevorzugt ein Neodym-Bor-Magnet mit einer magnetischen Remanenz von 1,2 T, der bei einem ausgeführten Rotor im Querschnitt die Maße 3,5 x 12 mm und eine Länge von 77 mm hatte. Die Richtung der Magnetisierung wechselt ab, d.h. der Magnet 214A hat radial außen einen Südpol, der nächste Magnet 214B außen einen Nordpol, etc., wie dargestellt.

Die Taschen 204A, 204B etc. sind im Querschnitt länger als die Dauermagnete 214A, 214B etc., werden also von diesen nicht ganz ausgefüllt. Dies wird am Beispiel der Tasche 204A erläutert, da die anderen Taschen 204 und Dauermagnete 214 einen identischen Aufbau haben.

Der Magnet 214A hat ein der Pollücke 210A zugewandtes oberes Längsende 216 und ein der Pollücke 210B zugewandtes unteres Längsende 218. Mit seinen breiten Enden 220 (radial innen) und 222 (radial außen) liegt er vollflächig gegen das Blechpaket 37 an. Dagegen liegt er mit seinem oberen Längsende 216 nur gegen zwei kurze Schultern 216a (radial innen) und 216b (radial außen) des Blechpakets 37 an, während er mit einem zentralen Bereich 216c des oberen Längsendes 216 an einen hohlen Abschnitt 224 angrenzt, der im Querschnitt hier die Form eines unregelmäßigen Fünfecks hat. Der hohle Abschnitt 224, und die entsprechenden sieben anderen hohlen Abschnitte, bilden jeweils einen magnetischen Widerstand zwischen benachbarten Dauermagneten 214 und verhindern so einen magnetischen Kurzschluss zwischen den vier Dauermagneten 214A bis 214D. Ersichtlich sind die Verhältnisse am unteren Ende 218 des Dauermagneten 214A identisch und werden deshalb nicht gesondert beschrieben.

Der hohle Abschnitt 224 hat gemäß Fig. 11 einen radial inneren Abschnitt 226, der im wesentlichen parallel zur inneren Begrenzung 220 verläuft und über die Schulter 216a in die innere Begrenzung 220 übergeht.

Auch hat der hohle Abschnitt 224 einen radial äußeren Abschnitt 228, der parallel zur äußeren Begrenzung 222 verläuft und über die Schulter 216b in diese übergeht.

Der äußere Abschnitt 228 geht unter einem stumpfen Winkel über in einen Außenabschnitt 230, der sich im wesentlichen parallel zur dortigen Peripherie 232 des Rotors 36 und bis fast zur Pollücke 210A erstreckt. Zwischen dem Abschnitt 230 und der Peripherie 232 erstreckt sich ein schmaler Steg 234 mit einer Breite von z.B. 0,5 mm bis etwa zur Pollücke 210A. Auch erstreckt sich zwischen dem hohlen Abschnitt 224 und dem zu ihm spiegelbildlichen hohlen Abschnitt 238 der Ausnehmung 204D ein schmaler Steg 240, der z.B. eine Breite von 0,5...1 mm und eine Länge von 1 mm haben kann.

Bei einer optimierten Ausführungsform hatte die Schulter 216b eine Breite von ca. 0,5 mm, und der Abschnitt 228 eine Breite von ca. 1 mm. Hierbei ergab sich ein gesamtes Rastmoment, das praktisch den Wert Null hatte. (Der Begriff des Rast- oder Haltemoments wird nachfolgend erläutert.)

Wie man erkennt, haben die schmalen Abschnitte 234, 240 etc. hauptsächlich eine mechanisch tragende Funktion. Der Abschnitt 234 arbeitet wegen der hohen Magnetflussdichte von etwa 2 T in der Sättigung und wirkt daher magnetisch wie ein Luftspalt.

Es hat sich in der Praxis gezeigt, dass die Größe der Schulter 216b und ihr Verhältnis zur Länge des Abschnitts 228 die Höhe des Rastmoments sehr stark beeinflusst, so dass durch Optimierung dieser Maße das Rastmoment sehr klein oder sogar zu Null gemacht werden kann. Dadurch vermeidet man die Notwendigkeit, die Nuten des Stators zu schrägen (to skew) und/oder eine überlappende Wicklung zu verwenden, was höhere Kosten bei der Herstellung verursachen würde, und ein solcher Rotor 36 eignet sich deshalb sehr gut als Antrieb in einer Servolenkung.

### Das Problem des Nutruckens (Halte- oder Rastmoments)

Bei Elektromotoren mit einem permanentmagnetischen Rotor erhält man, wenn wie hier ein mit Nutöffnungen versehenes Statorblechpaket 128 verwendet wird, das Phänomen, dass die Grenzen zwischen den einzelnen Rotorpolen, die sogenannten Polgrenzen, die Stellen größten Luftspalts suchen. Für den Betrachter hat es deshalb den Anschein, als würden diese Polgrenzen von den Nuten des Stators angezogen und würden in diese Nuten sozusagen "hineinfallen". Diesen Effekt bezeichnet man auf Englisch als "cogging", auf Deutsch als "Nutrucken". Das dabei entstehende Drehmoment bezeichnet man als Halte- oder Rastmoment, weil es bestrebt ist, den Rotor in bestimmten Drehstellungen festzuhalten.

Dieser Effekt wird erzeugt durch ein sogenanntes Reluktanzmoment, d.h. bei der Drehung des Rotors relativ zum Stator wird im magnetischen Kreis des Motors in bestimmten Drehwinkelbereichen magnetische Energie gespeichert, und in anderen Drehwinkelbereichen freigegeben. Zum Speichern muss dem Motor von außen Energie zugeführt werden, d.h. der Rotor wird hierdurch gebremst, und umgekehrt wird dort, wo gespeicherte Energie freigegeben wird, der Rotor durch diese Energie angetrieben.

Dreht man den Rotor eines solchen Motors von Hand, so hat man den Eindruck, dass man "jede Nut spürt".

Dieses Reluktanzmoment stört bei vielen Antriebsaufgaben, so dass man dort gezwungen ist, eisenlose Statorwicklungen zu verwenden, bei denen zwar kein Reluktanzmoment auftritt, aber - wegen des großen Luftspalts - die Leistung nicht zufriedenstellend ist.

Der Eindruck, dass die Pollücken des Rotors 36 magnetische Effekte verursachen, ist selbstverständlich unrichtig, denn an den Pollücken ist ja der magnetische Fluss sehr klein. Die magnetischen Effekt werden vielmehr durch diejenigen Zonen des Rotors 36 verursacht, an denen die magnetische Flussdichte B ihr Maximum hat. Für die Anschauung ist es aber nützlich (wenn auch physikalisch falsch), sich die magnetischen Wirkungen, welche das Nutrucken verursachen, in einer Pollücke bzw. an einer Polgrenze konzentriert zu denken.

Dieses Nutrucken ist bei vielen Anwendungen nicht akzeptabel, und daher können dort derartige Motoren bislang nur verwendet werden, wenn sie einen Luftspalt haben, der von Diskontinuitäten weitgehend frei ist.

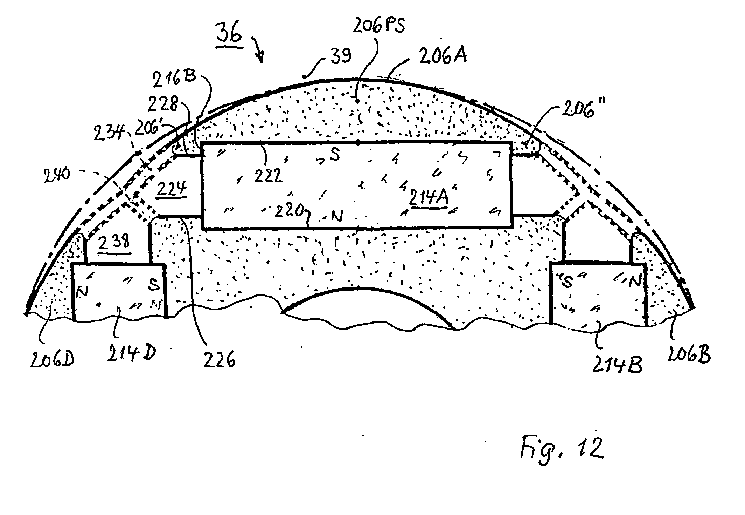

**Fig. 12** zeigt der Versuch einer theoretischen Erläuterung der Erfindung, basierend auf dem heutigen Kenntnisstand, der noch fehlerhaft sein kann.

Durch die Sättigung wirken die dünnen Stege 234, 240 magnetisch wie Luft, haben also keine magnetische Wirkung, was dadurch angedeutet ist, dass sie gestrichelt gezeichnet sind. Jedoch haben diese Teile eine wichtige mechanisch tragende Funktion.

Das Eisenvolumen, das außen durch den Luftspalt 39 und innen durch die Schulter 216b und den Abschnitt 228 berandet ist, gelangt nicht in die Sättigung und wirkt deshalb wie eine seitliche Verbreiterung 206', 206" des mit 206PS bezeichneten Polschuhs. Um dies auch grafisch hervorzuheben und besser verständlich zu machen, sind die magnetisch wirksamen Teile in Fig. 12 grau dargestellt.

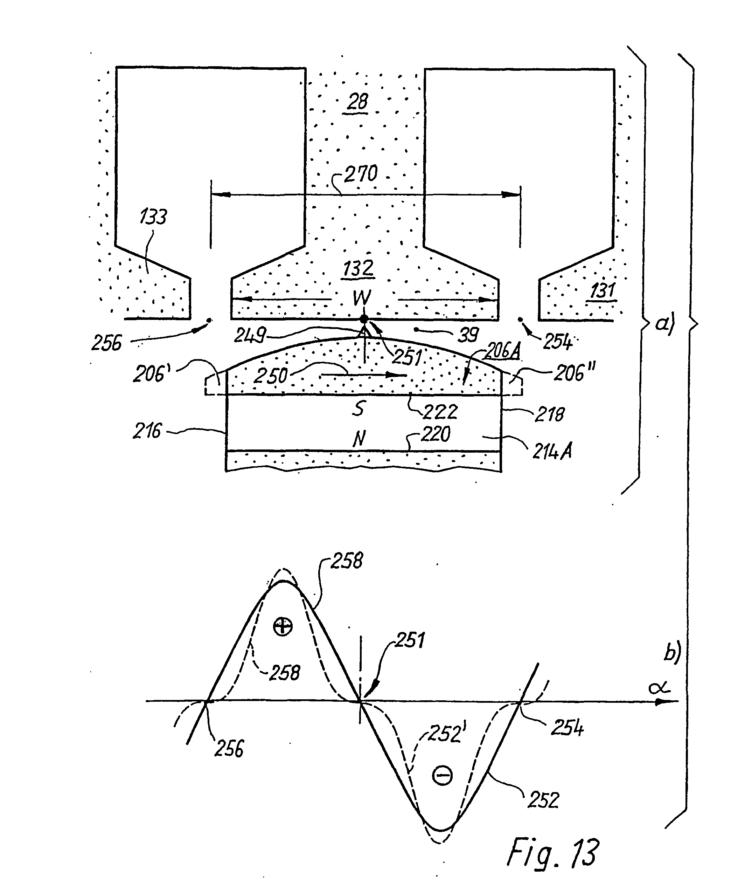

Diese Verbreiterung der Polschuhe tritt in identischer Form bei allen Rotorpolen 206A bis 206D auf und wird deshalb für die anderen Pole nicht nochmals beschrieben. Die vermutete Wirkung dieser Verbreiterungen auf das Reluktanzmoment wird nachfolgend bei Fig. 13 erläutert.

**Fig. 13a** zeigt, analog zu Fig. 9, in Abwicklung einen Zahn 132 des Statorblechpakets 28, und ihm gegenüberliegend einen Pol 206A des Rotors 36. Der Polschuh des Pols 206A hat etwa die Breite W des Zahnkopfs 132, und der Pol 206A wird sich, wenn keine äußeren Kräfte auf ihn wirken, mit seiner durch ein Dreieck symbolisierten Mitte 249 in die gezeichnete Drehstellung 251 einstellen, da in dieser Lage die im magnetischen Kreis gespeicherte Energie am kleinsten ist. Aus der Symmetrie der Darstellung ergibt sich direkt, dass in dieser Drehstellung 251 kein Reluktanzmoment auf den Rotorpol 206A wirken kann, sondern dass das eine stabile Ruhestellung des Rotors 36 ist.

Dreht man, z.B. von Hand, den Rotorpol 206A in einer Drehrichtung 250, so muss man hierfür Energie aufwenden, d.h. man muss ein bremsendes Drehmoment 252 überwinden, das in Fig. 13b dargestellt ist. Dieses bremsende Drehmoment entsteht dadurch, dass im magnetischen Kreis des Motors Energie gespeichert wird.

Wenn die Mitte 249 des Rotorpols 206A einer Stelle 254 gegenüberliegt, welche in der Mitte der Nutöffnung zwischen den Zähnen 132 und 131 liegt, wirkt wiederum kein Relluktanzmoment auf den Rotorpol 206A, d.h. dort hat das Reluktanzmoment 252 ebenfalls den Wert 0, und zwischen den Stellen 251 und 254 durchläuft es ein negatives Maximum.

Kommt der Rotorpol 206A von links, also von einer Stelle 256 in der Mitte der Nutöffnung zwischen den Zähnen 133 und 132, zur Stelle 251, so zieht ihn der Statorzahn 132 an, so dass in diesem Bereich ein antreibendes Reluktanzmoment 258 entsteht, das zwischen den Drehstellungen 256 und 251 sein Maximum hat.

Bei der dargestellten Konfiguration entstehen im Bereich der Drehstellungen 256, 251, 254 starke Änderungen des beschriebenen Reluktanzmoments von Minus nach Plus, oder von Plus nach Minus, was das erwähnte Nutrucken verursacht.

Durch die zusätzlichen Eisenvolumina an den Stellen 228 etc. (Fig. 11) wird nun, magnetisch gesehen, eine Verbreiterung der ferromagnetisch aktiven äußeren Teile (Fig. 12: Polschuhe 206PS) der Rotorpole 206A, 206B etc. bewirkt, oder anders gesagt, die Polschuhe dieser Rotorpole werden breiter, was in Fig. 13a durch die gestrichelten Randabschnitte 206' und 206" dargestellt ist. Dies hat ein verändertes Reluktanzmoment 252', 258" zur Folge, das in Fig. 13b gestrichelt eingezeichnet ist und das im Bereich der Drehstellungen 256, 251, 254 wesentlich weniger steil verläuft.

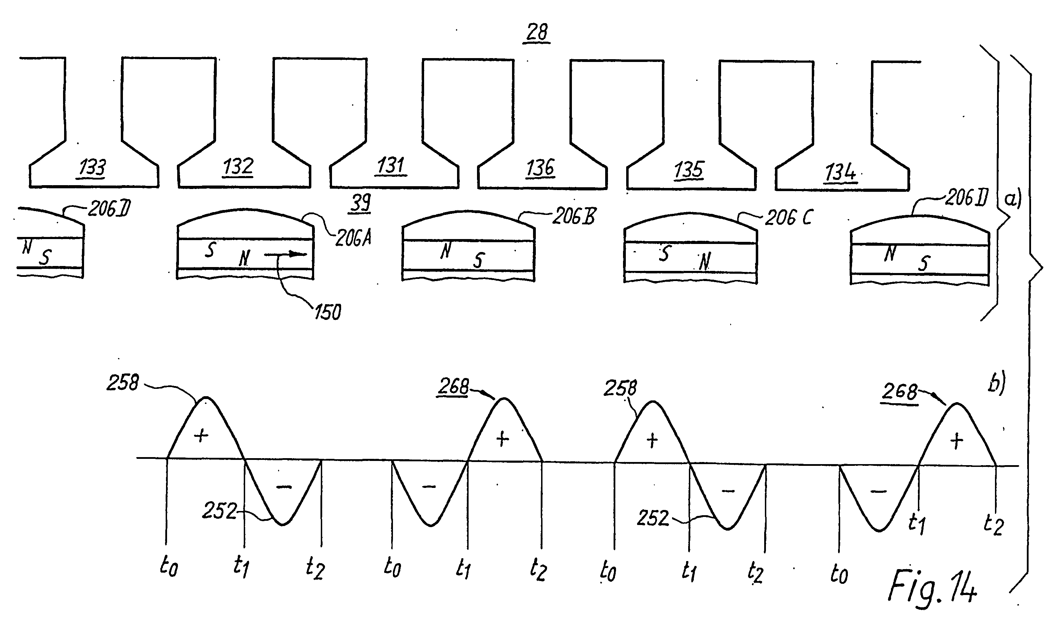

**Fig. 14** zeigt, ebenfalls in Abwicklung (in developed form), alle vier Rotorpole 206A bis 206D, sowie die Nuten und Nutzähne 131 bis 136 des Statorblechpakets 28.

Wenn der Rotorpol 206A dem Zahnkopf 132 exakt gegenübersteht, steht der benachbarte Rotorpol 206B der Nutöffnung zwischen den Zähnen 131 und 136 exakt gegenüber, weil das Verhältnis der sechs Statornuten zur Zahl der vier Rotorpole 6/4 = 1,5 beträgt, also nicht ganzzahlig ist. Eine Drehung in Drehrichtung 150 hat beim Pol 206A das bereits beschriebene Drehmoment 252, 258 zur Folge, und beim Rotorpol 206B ein hierzu gegenphasiges Drehmoment 268, das also das Moment 252, 258 weitgehend kompensiert. (Achtung: Die Zeitpunkte t₀, t₁, t₂ stimmen bei den vier dargestellten Kurven der Reluktanzmomente überein.)

Durch die Verbreiterungen 206', 206" (Fig. 12) der Polschuhe 206PS kann man also einen weitgehend identischen, aber gegenphasigen Verlauf dieser Reluktanzmomente und damit ein Haltemoment erreichen, das angenähert gleich Null ist. Es hat den Anschein, dass die effektive Breite eines Polschuhs 206PS, also einschließlich der seitlichen Verbreiterungen 206', 206" (Fig. 12), etwa der Nutteilung 270 entsprechen sollte, die in Fig. 13a eingezeichnet ist.

Naturgemäß sind im Rahmen der vorliegenden Erfindung vielfache Abwandlungen und Modifikationen möglich. Sofern die Rotor-Polschuhe auf mechanisch andere Weise befestigt werden können, können sie auch die in Fig. 12 für den Polschuh 206PS grau hervorgehobene Form haben, wobei dann die Stege 234, 240 entfallen können. Doch wird die dargestellte Lösung wegen ihrer großen Einfachheit und ihrer ausgezeichneten mechanischen Eigenschaften bevorzugt.

## Patentansprüche

1. Mehrphasiger Innenläufermotor, welcher aufweist:
Einen genuteten Stator (28);
einen vom Stator (28) durch einen Luftspalt (39) getrennten Rotor (36), welcher ein Blechpaket (37) mit einer Mehrzaht von ausgeprägten Polen (206A bis 206D) aufweist, die zwischen sich Pollücken (210A bis 210D) definieren;
im Blechpaket (37) des Rotors (36) ausgebildete Taschen (204A bis 204D), welche jeweils zwischen zwei ihnen benachbarten Pollücken (210A bis 210D) des Rotors (36) verlaufen;
in diesen Taschen (204A bis 204D) angeordnete Permanentmagnete (214A bis 214D), welche im wesentlichen radial magnetisiert sind und von denen jeder zwei pollückenseitige Enden (216, 218) hat, die den ihm benachbarten Pollücken (210A bis 210D) des Rotors (36) zugewandt sind;
im Bereich der Pollücken (210A bis 210D) vorgesehene hohle Abschnitte (224, 238) der Taschen (204A bis 204D), die nicht vom zugeordneten Permanentmagneten (214A bis 214D) ausgefüllt sind;
in Blechen des Rotor-Blechpakets (37) ausgebildete dünne Stege (234), welche die dem Luftspalt (39) zugewandten Bereiche (230) dieser hohlen Abschnitte (224) vom Luftspalt (39) trennen;
Verbreiterungen (Fig. 12: 206', 206") dieser Stege (234, 238), welche jeweils im Übergangsbereich zwischen dem pollückenseitigen Ende (216, 218) eines Permanentmagneten (214A bis 214D) und dem sich hieran anschließenden Steg (234) vorgesehen sind und diesen Steg in dem Übergangsbereich verbreitern, wobei eine Verbreiterung(206', 206") eine Schulter (216b) aufweist, welche benachbart zum pollückenseitigen Ende (216) des zugeordneten Rotormagneten (214) angeordnet ist, und am Übergang von der den Permanentmagneten (24) aufne menden Tasche (204) zu dem benachbarten hohlen Abschnitt (224, 238) angeordnet ist.

2. Motor nach Anspruch 1, bei welchem die Verbreiterung (Fig. 12: 206', 206") eines Stegs (234) so dimensioniert ist; dass sich eine Verringerung des gesamten auf den Rotor (36) wirkenden Rastmoments ergibt.

3. Motor nach Anspruch 2, bei Welchem die Verbreiterung (Fig. 12: 206', 206") eines Stegs (234) so ausgelegt ist, dass die Summe der von den einzelnen Rotorpolen (206A bis 206D) erzeugten Rastmomente (252, 258, 268) im wesentlichen zu Null wird.

4. Motor nach einem der vorhergehenden Ansprüche, bei welchem die Verbreiterung (Fig.12: 206', 206") eines Stegs (234) einen in Richtung zur benachbarten Pollücke (210A bis 210D) abnehmenden Querschnitt aufweist.

5. Motor nach einem der vorhergehenden Ansprüche, bei welchem der Querschnitt eines Stegs (234) mindestens in einem Bereich so gewählt ist, dass dieser Bereich im Betrieb in die magnetische Sättigung kommt.

6. Motor nach einem der vorhergehenden Ansprüche, bei welchem die ausgeprägten Pole, (206A bis 206D) des Rotors (36) auf ihrer dem Luftspalt (39) zugewandten Seite so ausgebildet sind, dass im Luftspalt (39) eine im wesentlichen sinusförmige Verteilung der magnetischen Flussdichte entsteht.

7. Motor nach Anspruch 6, welchem eine von der Rotorstellung des Motors (20) gesteuerte Vorrichtung zum Liefern von im wesentlichen sinusförmigen Strömen zugeordnet ist, um im Betrieb ein im wesentlichen konstantes elektromagnetisches Drehmoment zu erhalten.

8. Motor nach Anspruch 7, bei welchem zum Steuern der Vorrichtung abhängig von der Stellung des Rotors (36) ein Rotorstellungsgeber (110) vorgesehen ist.

9. Motor nach einem der vorhergehenden Anspruche, bei weichem des Verhältnis von Zahl der Rotorpole (206A bis 206D) zur Zahl der Statornuten nicht ganzzahlig ist.

10. Motor nach Anspruch 9, bei welchem dieses Verhältnis ein ganzzahliges Vielfaches von 0,5 ist.

11. Motor nach einem der vorhergehenden Ansprüche, bei welchem die Rotorpole (206A bis 206D) und/oder Statornuten nicht geschrägt sind.

12. Motor nach einem der vorhergehenden Ansprüche, bei welchem an mindestens einer Stirnseite des Rotor-Blechpakets (37) eine Abschlussscheibe (124) vorgesehen ist, welche die zur Aufnahme der Rotormagnete (214) vorgesehenen Taschen (204A bis 204D) an dieser Stirnseite des Rotors (36) verschließt.

13. Motor nach Anspruch 12, bei welchem die Abschlussscheibe (124) aus einem nicht ferromagnetischen Werkstoff, insbesondere aus rostfreiem Stahl, hergestellt ist.

14. Motor nach Anspruch 12 oder 13, bei welchem die mindestens eine Abschlussscheibe (124) durch eine Stanzpacketierung mit einem benachbarten ferromagnetischen Blech (116) des Rotor-Blechpakets (37) verbunden ist.

## Claims

1. Inner rotor motor with multiple phase windings which comprises:
a slotted stator (28);
a rotor (36) which is separated from the stator (28) by an air gap (39) and comprises a laminations pack (37) with a plurality of salient poles (206A to 206D) which define between them pole gaps (210A to 210D);
pockets (204A to 204D) which are formed in the laminations pack (37) of the rotor (36) and each run between two neighbouring pole gaps (210A to 210D) of the rotor (36);
permanent magnets (214A to 214D) which are arranged in these pockets (204A to 204D) and essentially radially magnetised and each have two ends (216, 218) which are located on the pole gap sides and face the pole gaps (210A to 210D) of the rotor (36) neighbouring it;
hollow portions (224, 238) of the pockets (204A to 204D) which are provided in the area of the pole gaps (210A to 210D) and not filled by the associated permanent magnet (214A to 214D);
thin strips (234) which are formed in laminations of the rotor laminations pack (37)and separate the areas (230) of these hollow portions (224) facing the air gap (39) from the air gap (39);
widenings (Fig. 12: 206', 206") of these strips (234, 238) which are in each case provided in the transitional area between the end (216, 218) of a permanent magnet (214A to 214D) on the pole gap side and the adjoining strip (234) and widen this strip in the transitional area, one widening (206', 206") comprising a shoulder (216b) which is arranged neighbouring the end (216) of the associated rotor magnet (214) on the pole gap side and located at the transition of the pocket (204) accommodating the permanent magnet (24) to the neighbouring hollow portion (224, 238).

2. Motor according to claim 1, in which the widening (Fig. 12: 206', 206") of a strip (234) is dimensioned so that the result is a reduction in the overall cogging torque acting on the rotor (36).

3. Motor according to claim 2, in which the widening (Fig. 12: 206', 206") of a strip (234) is designed so that the sum of the cogging torques (252, 258, 268) produced by the individual rotor poles (206A to 206D) essentially becomes zero.

4. Motor according to one of the preceding claims, in which the widening (Fig. 12: 206', 206") of a strip (234) comprises a cross section which decreases in the direction to the neighbouring pole gap (210A to 210D).

5. Motor according to one of the preceding claims, in which the cross section of a strip (234) in at least one area is chosen so that this area is magnetically saturated in operation.

6. Motor according to one of the preceding claims, in which the salient poles (206A to 206D) of the rotor (36) are formed on their side facing the air gap (39) so that essentially sinusoidal distribution of the magnetic flux density results in the air gap (39).

7. Motor according to claim 6, which has associated therewith a device controlled by the rotor position of the motor (20) for supplying essentially sinusoidal currents in order to obtain an essentially constant electromagnetic torque in operation.

8. Motor according to claim 7, in which a rotor position sensor (110) is provided to control the device dependent on the position of the rotor (36).

9. Motor according to one of the preceding claims, in which the ratio of the number of rotor poles (206A to 206D) to the number of stator slots is not a whole number.

10. Motor according to claim 9, in which this ratio is a whole numbered multiple of 0.5.

11. Motor according to one of the preceding claims, in which the rotor poles (206A to 206D) and/or stator slots are not bevelled.

12. Motor according to one of the preceding claims, in which a blanking disc (124) is provided on at least one end side of the rotor laminations pack (37), which blanking disc closes the pockets (204A to 204D) provided to accommodate the rotor magnets (214) on this end side of the rotor (36).

13. Motor according to claim 12, in which the blanking disc (124) is made of a non-ferromagnetic material, in particular stainless steel.

14. Motor according to claim 12 or 13, in which the at least one blanking disc (124) is connected by packing to a neighbouring ferromagnetic lamination (116) of the rotor laminations pack (37).

## Revendications

1. Moteur à rotor interne polyphasé, lequel présente :
un stator à encoches (28) ;
un rotor (36) séparé du stator (28) par un entrefer (39), lequel comporte un paquet de tôles (37) avec une pluralité de pôles saillants (206A à 206D) qui définissent entre eux des espaces interpolaires (210A à 210D) ;
des poches (204A à 204D) formées dans le paquet de tôles (37) du rotor (36), lesquelles s'étendent chaque fois entre deux espaces interpolaires (210A à 210D) du rotor (36) qui leur sont contigus ;
des aimants permanents (214A à 214D) disposés dans ces poches (204A à 204D), lesquels sont essentiellement magnétisés radialement et dont chacun possède deux extrémités côté espace interpolaire (216, 218) qui sont tournées vers les espaces interpolaires (210A à 210D) du rotor (36) qui leur sont contigus ;
des sections creuses (224, 238) des poches (204A à 204D) prévues dans la zone des espaces interpolaires (210A à 210D), qui ne sont pas remplies par l'aimant permanent (214A à 214D) associé;
de minces entretoises (234) formées dans les tôles du paquet de tôle du rotor (37), lesquelles séparent les zones (230) de ces sections creuses (224) tournées vers l'entrefer (39) de l'entrefer (39) ;
des élargissements (fig. 12 : 206', 206") de ces entretoises (234, 238), lesquels sont prévus chaque fois dans la zone de transition entre l'extrémité côté espace interpolaire (216, 218) d'un aimant permanent (214A à 214D) et l'entretoise (234) qui lui est contiguë et élargissent cette entretoise dans la zone de transition, un élargissement (206', 206") présentant un épaulement (216b) qui est contigu à l'extrémité côté espace interpolaire (216) de l'aimant de rotor (214) associé et est disposé à la transition de la poche (204) recevant l'aimant permanent (214) avec la section creuse (224, 238) contiguë.

2. Moteur selon la revendication 1, dans lequel l'élargissement (fig. 12: 206', 206") d'une entretoise (234) est dimensionné de telle manière qu'il en résulte une diminution du couple de détente total agissant sur le rotor (36).

3. Moteur selon la revendication 2, dans lequel l'élargissement (fig. 12 : 206', 206") d'une entretoise (234) est dimensionné de telle manière que la somme des couples de détente (252, 258, 268) générés par les différents pôles de rotor (206A à 206D) devient essentiellement nulle.

4. Moteur selon l'une des revendications précédentes, dans lequel l'élargissement (fig. 12 : 206', 206") d'une entretoise (234) présente une section décroissante en direction de l'espace interpolaire (210A à 210D) contigu.

5. Moteur selon l'une des revendications précédentes, dans lequel la section d'une entretoise (234) est choisie au moins dans une zone de telle manière que cette zone arrive à saturation magnétique en service.

6. Moteur selon l'une des revendications précédentes, dans lequel les pôles saillants (206A à 206D) du rotor (36) sont formés, de leur côté tourné vers l'entrefer (39), de telle manière qu'il en résulte une répartition essentiellement sinusoïdale de la densité de flux magnétique dans l'entrefer (39).

7. Moteur selon la revendication 6, auquel est associé un dispositif commandé par la position de rotor du moteur (20) conçu pour délivrer des courants essentiellement sinusoïdaux de manière à obtenir un couple électromagnétique essentiellement constant en service.

8. Moteur selon la revendication 7, dans lequel il est prévu un capteur de position de rotor (110) pour la commande du dispositif en fonction de la position du rotor (36).

9. Moteur selon l'une des revendications précédentes, dans lequel le rapport du nombre de pôles de rotor (206A à 206D) au rapport des encoches de stator n'est pas entier.

10. Moteur selon la revendication 9, dans lequel ce rapport est un multiple entier de 0,5.

11. Moteur selon l'une des revendications précédentes, dans lequel les pôles de rotor (206A à 206D) et/ou les encoches de stator ne sont pas biseautés.

12. Moteur selon l'une des revendications précédentes, dans lequel il est prévu sur au moins une face frontale du paquet de tôles du rotor (37) une plaque de fermeture (124) qui ferme les poches (204A à 204D) prévues pour recevoir les aimants de rotor (214) sur cette face frontale du rotor (36).

13. Moteur selon la revendication 12, dans lequel la plaque de fermeture (124) est réalisée dans un matériau non ferromagnétique, en particulier en acier inoxydable.

14. Moteur selon la revendication 12 ou 13, dans lequel ladite au moins une plaque de fermeture (124) est liée par poinçonnage à une tôle ferromagnétique (116) contiguë du paquet de tôles du rotor (37).
